# EUROPÄISCHE PATENTSCHRIFT

(11) **EP 2 172 296 B1**
(45) Veröffentlichungstag und Bekanntmachung des Hinweises auf die Patenterteilung: **21.12.2011**
(21) Anmeldenummer: 08105468.6
(22) Anmeldetag: 01.10.2008
(51) Int. Cl.: B23K 9/007, B23K 9/067

(54) **Verfahren und Vorrichtung zum Lichtbogenschweißen**
Method and device for arc welding
Procédé et dispositif destinés au soudage à l'arc

(43) Veröffentlichungstag der Anmeldung: 07.04.2010
(73) Patentinhaber: EWM Hightec Welding GmbH, 56271 Mündersbach (DE)
(72) Erfinder: Neumann, Herbert, 56170 Bendorf (DE); Szczesny, Michael, 56235 Ransbach-Baumbach (DE)
(74) Vertreter: Cohausz & Florack

(56) Entgegenhaltungen:
- EP-A- 1 142 664
- DE-A1- 2 459 309
- US-A- 4 628 180

## Beschreibung

Die vorliegende Erfindung betrifft ein Lichtbogenschweißgerät zum Schweißen eines Werkstücks mit einer beweglichen Elektrode, einem versorgungsspannungsgespeisten Leistungsteil, einem Kontrollmittel und einem Kontaktdetektionsmittel, das konfiguriert ist, die Trennung eines Kontaktes der beweglichen Elektrode mit einer Oberfläche des Werkstücks zu detektieren, sowie ein Verfahren zum Schweißen mit einem entsprechenden Lichtbogenschweißgerät.

Vorrichtungen dieser Art sind bekannt. Sie werden für unterschiedliche Schweißaufgaben eingesetzt. Insbesondere existieren auch handbediente Lichtbogenschweißgeräte.

Zu den Lichtbogenschweißverfahren gehören beispielsweise das Wolfram-Inertgasschweißen (WIG-Schweißen), das Plasmaschweißen und das Metallschutzgasschweißen. Das WIG-Schweißen zeichnet sich durch eine Reihe von Vorteilen aus. So existieren WIG-Schweißgeräte, die sowohl zum Punkt- als auch zum Nahtschweißen verwendet werden können. Zudem wird mit einer nicht abschmelzenden Elektrode gearbeitet. Dies führt zu reduzierter Verunreinigung der Schweißnaht oder des Schweißpunktes. Das WIG-Schweißen ist für eine breite Auswahl unterschiedlicher Werkstoffe geeignet. Durch Anpassung des Verlaufs des Schweißsstroms, ergibt sich die besonders vorteilhafte Möglichkeit, Schweißungen unter verschiedensten Rahmenbedingungen durchzuführen. Ist das versorgungsspannungsgespeiste Leistungsteil als Schweißinverter ausgebildet, ergeben sich weitere Vorteile. Das WIG-Schweißgerät kann besonders kompakt aufgebaut sein. Des Weiteren lässt sich in diesem Fall die Wärmeeinbringung in das Material eines zu bearbeitenden Werkstücks besonders gut kontrollieren.

Der zum Schweißen eingesetzte Lichtbogen brennt zwischen einer beweglichen Elektrode und dem Werkstück. Aus der Praxis sind verschiedene Verfahren, den Lichtbogen zu zünden, bekannt.

Gemäß einer ersten Variante wird ohne Berührung zwischen der Oberfläche des zu schweißenden Werkstücks und der beweglichen Elektrode ein Hochspannungsimpuls genutzt, um den Lichtbogen zu zünden. Der Hochspannungsimpuls wird durch Betätigung eines Brennertasters (BRT) ausgelöst. Aufgrund einer durch den Hochspannungsimpuls bewirkten Ionisierung des zwischen beweglicher Elektrode und Werkstückoberfläche befindlichen Gases kann sich der Lichtbogen zwischen Elektrode und Werkstück aufbauen. Eine zweite Variante ist die Kontaktzündung. Dabei wird die bewegliche Elektrode auf die Werkstückoberfläche aufgesetzt. Es entsteht ein Kurzschluss. Durch das Betätigen des Brennertasters wird eine Spannung aufgebaut. Sie kann eine Hilfsspannung sein, die geringer ist als die Spannung, die später zum eigentlichen Schweißen des Werkstücks verwendet wird. Anschließend wird die Elektrode vom Werkstück wegbewegt. Auch hier findet eine Ionisierung des zwischen beweglicher Elektrode und Werkstückoberfläche befindlichen Gases statt, die es erlaubt, dass ein Schweißlichtbogen entstehen kann.

Die erste Variante besitzt gegenüber der zweiten den Vorteil, dass keine Berührung von beweglicher Elektrode und Werkstückoberfläche stattfindet, bei der eine hohe Spannung an der Elektrode anliegt. So wird vermieden, dass Material des Werkstücks aufgeschmolzen wird während die bewegliche Elektrode es berührt. Anderenfalls bestünde das Risiko, dass Werkstücksmaterial an der Elektrode haftet. Einerseits kann dadurch die Lebensdauer der Elektrode beeinträchtigt werden. Andererseits kann das Ablösen des Werkstückmaterials von der Elektrode zu einem späteren Zeitpunkt zu einer Verunreinigung der Schweißnaht oder des Schweißpunkts führen.

Gemein ist diesen beiden bekannten Verfahren zur Lichtbogenzündung, dass der Zündvorgang jeweils durch das Betätigen eines Bedienelements eingeleitet wird, das sich am Brenner befindet.

Ein Nachteil der Lichtbogenzündung mittels eines Bedienelements am Brenner liegt darin, dass das Betätigen des Tasters dazu führen kann, dass der Brenner und damit die bewegliche Elektrode eine unerwünschte Bewegung ausführt. Dies kann zur Folge haben, dass das Werkstück nicht an der gewünschten Stelle geschweißt wird. Nachteilige Eigenschaften des bearbeiteten Werkstücks und möglicherweise die Beeinträchtigung der Qualität eines Erzeugnisses, dessen Bestandteil das Werkstück später bildet, können die Folge sein. Wirtschaftliche Nachteile entstehen, wenn, beispielsweise beim Punktschweißen, mehrer Lichtbögen in gewissen Zeitabständen gezündet werden müssen. Dann ergibt sich ein Zeitverlust durch die Notwendigkeit der vielfachen Betätigung des Tasters. Gleichzeitig leider der Bedienkomfort.

Lichtbogenschweißgeräte gemäß Oberbegriff sind aus der US 4 628 180 A, der EP 1 142 664 A2 und der DE 24 59 309 A1 bekannt. Gemein ist den in diesen Druckschriften offenbarten Lichtbogenschweißgeräten, dass jeweils die Lichtbogenzündung nach dem Lift-Arc-Prinzip erfolgt. Dabei wird der Elektrode bereits wenn diese in Kontakt mit der Werkstücksoberfläche steht eine elektrische Leistung zugeführt, die ausreichend ist, um beim Abheben der Elektrode vom Werkstück einen Lichtbogen zu zünden. Um diesen zunächst instabilen Lichtbogen zu stabilisieren, wird gemäß der Lehre dieser Druckschriften der zwischen Elektrode und Werkstück fließende Strom zumindest kurzzeitig erhöht.

Daher liegt der Erfindung die Aufgabe zugrunde, ein Lichtbogenschweißgerät der eingangsgenannten Art dahingehend weiterzuentwickeln, dass der Verfahrensablauf verbessert und vereinfacht wird.

Diese Aufgabe wird erfindungsgemäß bei einem Lichtbogenschweißgerät der eingangs genannten Art dadurch gelöst, dass das Kontrollmittel konfiguriert ist, nach der Detektion der Trennung des Kontaktes der beweglichen Elektrode mit der Oberfläche des Werkstücks automatisch einen Lichtbogen zu zünden und nach einem vorgegebenen Muster aufrechtzuerhalten, und dass das Kontrollmittel oder das Kontaktdetektionsmittel konfiguriert ist, die automatische Zündung des Lichtbogens nach einer vorgegebenen Verzögerungszeit nach der Trennung des Kontakts von beweglicher Elektrode und Werkstücksoberfläche zu initiieren.

Bei einem Verfahren der eingangs genannten Art wird diese Aufgabe dadurch gelöst, dass nach der Trennung des Kontakts durch das Kontrollmittel automatisch ein Lichtbogen gezündet und nach einem vorgegebenen Muster aufrechterhalten wird, wobei die automatische Zündung des Lichtbogens nach einer vorgegebenen Verzögerungszeit nach der Trennung des Kontakts von beweglicher Elektrode und Werkstücksoberfläche durch das Kontrollmittel oder das Kontaktdetektionsmittel initiiert wird.

Die Verzögerungszeit kann durch den Bediener einstellbar sein. Wenn das Kontaktdetektionsmittel erst nach Ablauf der Verzögerungszeit ein Signal, dass die Zündung des Lichtbogens initiiert werden soll an das Kontrollmittel weitergibt, ist es konfiguriert, die automatische Zündung des Lichtbogens nach einer vorgegebenen Verzögerungszeit nach der Trennung des Kontakts von Elektrode und Werkstücksoberfläche zu initiieren.

Signalisiert das Kontaktdetektionsmittel die Trennung des Kontakts zwar umgehend, das Kontrollmittel wartet jedoch zunächst den Ablauf der Verzögerungszeit ab, bevor es das versorgungsspannungsgespeiste Leistungsteil dahingehend beeinflusst, die Zündung des Lichtbogens einzuleiten, ist das Kontrollmittel konfiguriert die automatische Zündung des Lichtbogens nach einer vorgegebenen Verzögerungszeit nach der Trennung des Kontakts von Elektrode und Werkstücksoberfläche zu initiieren.

Die Erfindung zeichnet sich dadurch aus, dass zum Zeitpunkt der Zündung des Lichtbogens kein Kontakt zwischen der beweglichen Elektrode und der Oberfläche des Werkstücks besteht und der Lichtbogen automatisch, d.h. nicht aufgrund einer Betätigung eines Bedienelements am Brenner gezündet wird.

Ein Vorteil des Vorsehens der vorgegebenen Verzögerungszeit ist darin zu sehen, dass auf diese Weise sichergestellt werden kann, dass genug Zeit nach der Trennung des Kontakts und vor der Lichtbogenzündung bleibt, in der der Bediener den gewünschte Abstand zwischen Werkstückoberfläche und Elektrode hergestellt kann. Alternativ kann die Verzögerungszeit natürlich auch schon zu laufen beginnen, sobald der Kontakt von beweglicher Elektrode und Werkstückoberfläche hergestellt wurde. Läuft die Verzögerungszeit ab, ohne dass der Kontakt getrennt worden ist, kann das Kontrollmittel oder das Kontaktdetektionsmittel konfiguriert sein, die Zündung des Lichtbogens nicht einzuleiten.

Eine Ausführungsform der Erfindung sieht vor, dass eine Fühlerspannung zwischen beweglicher Elektrode und Werkstück angelegt werden kann, die mittels des Kontaktdetektionsmittels messbar ist. Bei Kontakt von beweglicher Elektrode und Werkstücksoberfläche liegt ein Kurzschluss vor. Die Fühlerspannung bricht ein. In einer Ausführungsform der vorliegenden Erfindung ist die Fühlerspannung so gewählt, dass sich Elektrode und Werkstück bei Kontakt nur in sehr geringem Maß erwärmen. Beispielsweise kann die Fühlerspannung kleiner als 10 V sein. Der Spannungseinbruch durch den Kurzschluss wird von dem Kontaktdetektionsmittel detektiert. Der Kontakt zwischen der beweglichen Elektrode und der Werkstückoberfläche kann angenommen werden, wenn der Wert der Fühlerspannung unter einen bestimmten unteren Schwellwert fällt, dessen Größe von der eingesetzten Fühlerspannung abhängt.

Ein solches Kontaktdetektionsmittel kann verschiedenartig ausgestaltet sein. Beispielsweise kann es ein digitales Spannungsmessgerät beinhalten, das die Spannung zwischen der beweglichen Elektrode und dem Werkstück hochohmig abgreift und über einen Analog-Digital-Umsetzer in ein digitales Signal umwandelt. Dieses Signal kann dann zum Beispiel mittels eines digitalen Signalprozessors (DSP) oder einer anwendungsspezifischen integrierten Schaltung (ASIC) ausgewertet werden. Die Signalverarbeitung kann auch über eine Software vorgenommen werden, die auf einem Prozessor ausgeführt wird, der neben der Kontaktdetektion noch für weitere Aufgaben, wie die Kontrolle des Schweißstromes, eingesetzt wird. Der Vorteil dieser Variante kann in einem geringeren Herstellungsaufwand und verminderten Kosten liegen, da spezielle Komponenten für die Kontaktdetektion nicht vorgesehen werden müssen.

Wird die bewegliche Elektrode von der Oberfläche des Werkstücks wegbewegt, wird der Kontakt der beweglichen Elektrode mit der Oberfläche des Werkstücks getrennt. Ein Kurzschluss besteht nicht mehr. Die Fühlerspannung steigt an. Dieser Anstieg wird vom Kontaktdetektionsmittel detektiert. Die Trennung des Kontakts kann beispielsweise angenommen werden, wenn die Fühlerspannung einen bestimmt oberen Schwellwert erreicht oder überschritten hat.

Dadurch, dass die bewegliche Elektrode in dieser Ausführungsform selbst als Messfühler eingesetzt wird, ergeben sich mehrere Vorteile. Zum einen wird ein zusätzlicher Messfühler nicht benötigt. Kosten werden so eingespart, zumal die Elektrode ohnehin mit dem versorgungsspannungsgespeisten Leistungsteil verbunden sein muss. Zum anderen wird erreicht, dass verlässlich festgestellt werden kann, ob tatsächlich die bewegliche Elektrode selbst die Werkstückoberfläche berührt.

Demgegenüber kann eine alternative Ausführungsform vorsehen, dass die Fühlerspannung nicht zwischen der beweglichen Elektrode und dem Werkstück sondern zwischen einem getrennt von der beweglichen Elektrode vorgesehenem Kontaktmittel und dem Werkstück angelegt werden kann. Als ein solches Kontaktmittel kann beispielsweise ein Metallstift in der Nähe der Elektrode vorgesehen sein. Sind die Spitze der beweglichen Elektrode und die Spitze des Kontaktmittel nah beieinander angeordnet, ist zwar die Wahrscheinlichkeit hoch, dass die bewegliche Elektrode nicht in Kontakt mit der Werkstücksoberfläche steht, wenn das Kontaktmittel dies nicht tut, ausgeschlossen ist dies aber nicht.

Nachdem die Trennung des Kontakts festgestellt wurde, wird erfindungsgemäß automatisch ein Lichtbogen gezündet. Dazu kann das im erfindungsgemäßen Lichtbogenschweißgerät vorgesehene Kontrollmittel das versorgungsspannungsgespeiste Leistungsteil derart ansteuern, dass, beispielsweise über einen Hochspannungsimpuls, ein Lichtbogen zwischen der beweglichen Elektrode und dem Werkstück gezündet wird. Es sei an dieser Stelle angemerkt, dass das Kontrollmittel sowohl zum Steuern als auch zum Regeln des versorgungsspannungsgespeisten Leistungsteils konfiguriert sein kann. Beispielsweise kann so neben der festen Vorgabe eines Verlaufs des Schweißstromes, d.h. seiner Steuerung, über eine Messung des tatsächlichen Stromes eine Regelung des versorgungsspannungsgespeisten Leistungsteils vorgenommen werden, so dass sich ein zum jeweiligen Zeitpunkt gewünschter Schweißstromsollwert einstellt. Ein Schweißergebnis, das den Wünschen des Bedieners besser entspricht, wird so möglich.

Ein erfindungsgemäßes Kontrollmittel kann verschieden ausgestaltet sein. Beispielsweise kann es sich um einen digitalen Signalprozessor oder eine anwendungsspezifische integrierte Schaltung handeln. Die Steuerung kann auch über eine Software vorgenommen werden, die auf einem Prozessor ausgeführt wird, der neben der Steuerung des versorgungsspannungsgespeisten Leistungsteils beispielsweise für die Kontaktdetektion eingesetzt wird.

Der Lichtbogen wird nach einem vorgegebenen Muster aufrechterhalten. Das heißt, dass Parameter des Schweißprozesses wie die Stärke des Schweißstroms und je nach Schweißverfahren auch der zeitliche Verlauf des Schweißstroms automatisch gesteuert oder geregelt werden. Das vorgegebene Muster, den Lichtbogen aufrechtzuerhalten, kann die Abschaltung des Lichtbogens nach einem bestimmten Zeitintervall einschließen.

In einer Ausführungsform der Erfindung ist das das Kontrollmittel konfiguriert, mindestens zweimal hintereinander einen Lichtbögen zu zünden, nach einem vorgegebenen Muster aufrechtzuerhalten und erlöschen zu lassen. Es ergeben sich verschieden Vorteile.

Zum Beispiel kann es sich bei dem erfindungsgemäßen Lichtbogenschweißgerät um ein WIG-Schweißgerät handeln. Neuartige WIG-Schweißgeräte lassen sich zum WIG-Punktschweißen einsetzten. Beim WIG-Punktschweißen werden mehrere Schweißvorgänge nacheinander ausgeführt. Der Lichtbogen wird dazu zwischen zwei Schweißvorgängen für eine gewisse Dauer unterbrochen. Während des Unterbrechungsintervalls können die bewegliche Elektrode und das Werkstücks relativ zueinander bewegt werden, so dass der Ort, an dem der nächste Schweißpunkt zu setzen ist, angesteuert werden kann. Ist dies geschehen, kann der Lichtbogen für den zweiten Schweißvorgang erneut gezündet werden. Das WIG-Punktschweißen bietet gegenüber dem Widerstandspunktschweißen zahlreiche Vorteile. So ist es mit dieser Technik beispielsweise möglich, Bleche zu heften, die nur von einer Seite zugänglich sind, da das Einbringen einer Kupferunterlage nicht unbedingt notwendig ist. Die Wärmeeinbringung kann beim WIG-Punktschweißen gering sein.

Daher ist es möglich, das Auftreten von thermischen Spannungen im Werkstück zu reduzieren. Ist das Kontrollmittel konfiguriert, mindestens zweimal hintereinander einen Lichtbögen zu zünden, nach einem vorgegebenen Muster aufrechtzuerhalten und erlöschen zu lassen, erfolgt die erneute Zündung des Lichtbogens für einen zweiten Schweißvorgang automatisch, d.h. ohne Zutun des Bedieners. Ein Vorteil einer solchen Ausgestaltung der vorliegenden Erfindung ist darin zu sehen, dass zwischen zwei Schweißvorgängen der Bediener nicht gezwungen ist, eine Bedienhandlung vorzunehmen, damit die der Lichtbogen ein zweites Mal gezündet wird. Lediglich für die gewünschte Bewegung von beweglicher Elektrode und Werkstück zueinander ist zu sorgen. Eine Steigerung des Bedienkomforts sowie eine erhöhte Produktivität können die Folge sein.

Im Rahmen einer anderen Ausführungsform der Erfindung kann hingegen vorgesehen sein, dass das Kontrollmittel konfiguriert ist, nach dem Erlöschen des Lichtbogens eine erneute Zündung des Lichtbogens erst zu initiieren, wenn eine wiederholte Trennung des Kontaktes der beweglichen Elektrode mit einer Oberfläche des Werkstücks durch das Kontaktdetektionsmittel detektiert wurde. Vorteile dieser Ausführungsform können in den umfassenden Möglichkeiten des Bedieners zur Kontrolle des Schweißvorgangs gesehen werden. So ist der Bediener nicht an ein starres Zeitraster gebunden, wenn es darum geht, wann der nächste Schweißvorgang beginnen soll. Unter anderem kann so verhindert werden, dass die bewegliche Elektrode noch nicht am Ort des gewünschten zweiten Schweißpunktes positioniert ist, wenn der Lichtbogen gezündet wird. Die Qualität der Schweißung kann somit gesteigert werden. Die Möglichkeit zur Verkürzung des zeitlichen Abstands zwischen zwei Schweißvorgängen ergibt sich dadurch, dass der Bediener in die Lage versetzt wird, selbständig zu bestimmen, wann mit dem zweiten Schweißvorgang begonnen werden soll. Im Gegensatz dazu müsste bei einem automatischen Beginn des zweiten Schweißvorgangs ein Zeitabstand vorgegeben werden, der es in jedem Fall erlaubt, die bewegliche Elektrode von der Position des ersten Schweißpunktes zur Position des zweiten Schweißpunktes zu bewegen, damit nicht an einer ungewünschten Stelle ein Schweißpunkt gesetzt wird. Dazu ist im Zweifel ein Zeitabstand zu wählen, der in der überwiegenden Zahl der Fälle länger ist als tatsächlich benötigt wird, um die zweite Position einzunehmen. Es ergibt sich dann eine Wartezeit, während der trotz korrekter Positionierung von beweglicher Elektrode und Werkstück zueinander die Zündung des Lichtbogens noch nicht stattfindet. Bei einer großen Anzahl an Schweißpunkten steigt der Zeitaufwand somit unnötig an.

Dass zum Einleiten eines zweiten Schweißvorgangs ein zweites Mal ein Kontakt zwischen beweglicher Elektrode und Werkstückoberfläche herzustellen und zu trennen ist, schließt selbstverständlich nicht aus, dass, wie oben beschrieben, nach der erfolgten Trennung des Kontakts die Zündung des Lichtbogens mit einer geringen Zeitverzögerung stattfindet. Eine solche Verzögerung erlaubt es, denn erforderlichen Abstand zwischen beweglicher Elektrode und Werkstück herzustellen. Im Allgemeinen reicht hierzu gegenüber der notwendigen Verzögerung, um sicher von einem Schweißpunkt zu der Position eines nächsten zu gelangen, eine deutlich kürzere Verzögerung aus.

Gemäß einer weiteren Ausführungsform der vorliegenden Erfindung ist das Kontrollmittel oder das Kontaktdetektionsmittel konfiguriert, die Zündung eines Lichtbogens nur in einem zuvor gewählten Aktivmodus einzuleiten. Falls sich das Lichtbogenschweißgerät im Aktivmodus befindet, bewirkt die Trennung des Kontakts von beweglicher Elektrode und Werkstückoberfläche die, gegebenenfalls verzögerte, Zündung des Lichtbogens. Befindet sich das Lichtbogenschweißgerät jedoch nicht im Aktivmodus, sondern in einem Passivmodus, bleibt die Trennung des Kontakts von beweglicher Elektrode und Werkstückoberfläche ohne Folgen. Das Kontrollmittel sorgt nicht für eine Lichtbogenzündung.

Wenn sich das Lichtbogenschweißgerät nicht im Aktivmodus, sondern im Passivmodus befindet, und das Kontaktdetektionsmittel im Passivmodus eine erfolgte Trennung des Kontakts von Elektrode und Werkstücksoberfläche nicht dem Kontrollmittel signalisiert, ist das Kontaktdetektionsmittel konfiguriert, die Zündung des Lichtbogens nur in einem zuvor gewählten Aktivmodus einzuleiten. Signalisiert das Kontaktdetektionsmittel die Trennung des Kontakts zwar auch im Passivmodus und reagiert das Kontrollmittel darauf nicht damit, dass es die Zündung des Lichtbogens einleitet, ist das Kontrollmittel konfiguriert die Zündung des Lichtbogens nur in einem zuvor gewählten Aktivmodus einzuleiten.

Das Kontaktdetektionsmittel kann konfiguriert sein, die Trennung des Kontakts im Passivmodus nicht zu detektieren. Möglich ist auch, dass im Passivmodus keine Fühlerspannung zwischen beweglicher Elektrode und Werkstück anliegt, so dass in diesem Modus der Energiebedarf des Lichtbogenschweißgerätes reduziert sein kann.

Damit ein erfindungsgemäßes Lichtbogenschweißgerät in den Aktivmodus versetzt werden kann, kann ein entsprechendes Bedienmittel vorgesehen sein. In einer Ausführungsform der vorliegenden Erfindung ist ein Brennertaster vorgesehen, dessen Betätigung den Übergang in den Aktivmodus auslöst. Ein Vorteil dieser Ausführungsform kann darin gesehen werden, dass ein Bediener auf diese Weise besonders einfach und bequem den Aktivmodus anwählen kann, während er den Brenner bereits in der Hand hält. Ein Vorteil der Erfindung ist, dass die Anordnung des Bedienmittels am Brenner nicht nachteilig ist. Eventuelle Beeinträchtigungen der Anordnung von beweglicher Elektrode und Werkstück durch das Betätigen eines Bedienmittels am Brenner wirken sich erfindungsgemäß nicht nachteilig aus. Beispielsweise kann eine Wippbewegung des Brenners aufgrund der Betätigung des Brennertasters zwar die Position der beweglichen Elektrode bezüglich des Werkstücks verändern, jedoch wird zunächst noch kein Lichtbogen gezündet. Ein Bediener kann somit eine Positionskorrektur vornehmen. Der Vorgang der Lichtbogenzündung wird erst zu einem späteren Zeitpunkt dadurch eingeleitet, dass der Kontakt zwischen beweglicher Elektrode und Werkstück, falls nicht bereits zuvor geschehen, hergestellt und anschließend getrennt wird.

Neben anderen Ausführungen ist auch eine Ausgestaltung des Bedienmittels, das konfiguriert ist, das Lichtbogenschweißgerät in den Aktivmodus zu versetzen, als Taster möglich, der nicht am Brenner, sondern an einem Gehäuse, das zum Beispiel das versorgungsspannungsgespeiste Leistungsteil oder weitere Bedienelemente zur Vornahme von Einstellungen am Schweißgerät enthält, vorgesehen ist.

Die vorliegende Erfindung sieht vor, dass nach dem Abschluss eines ersten Schweißvorgangs, wie dem Setzen eines ersten Schweißpunktes, der Aktivmodus aufrechterhalten werden kann. Das sukzessive Ausführen mehrerer Schweißvorgänge ohne das Bedienmittel mehrfache betätigen zu müssen ist so möglich.

Gemäß einer weiteren Ausführungsform der vorliegenden Erfindung erfolgt ein Übergang vom Aktivmodus zum Passivmodus automatisch nach dem Verstreichen eines vorgegebenen Zeitraumes nach dem Ende eines Schweißvorgangs (Timeout). Alternativ kann der Übergang vom Aktivmodus zum Passivmodus auch automatisch nach einer bestimmten Zahl von Schweißvorgängen stattfinden. Gemäß einer dritten Variante ist für das Auslösen des Übergangs vom Aktivmodus zum Passivmodus ein entsprechendes Bedienmittel vorgesehen. Dabei kann es sich um ein eigens dafür vorgesehenes Bedienmittel oder um das Bedienmittel handeln, das auch zum Herbeiführen des Übergangs von Passiv- nach Aktivmodus vorgesehen ist. Ein solches Bedienmittel kann auch zusätzlich zu den oben beschriebenen Möglichkeiten des automatischen Übergangs von Aktiv- nach Passivmodus vorhanden sein. Dies erlaubt einem Bediener, den Passivmodus einzustellen, ohne dass er einen Timeout abwarten oder eine vorgegebene Zahl an Schweißvorgängen vornehmen müsste.

Alle drei Varianten haben unter anderem den Vorteil eines erhöhten Bedienkomforts und einer verbesserten Sicherheit des erfindungsgemäßen Lichtbogenschweißgerätes. So wird verhindert, dass ein Lichtbogen zu einem Zeitpunkt gezündet wird, zu dem dies nicht erwünscht ist. Dadurch kann auch eine negative Beeinflussung des Schweißergebnisses vermieden werden. Es kann für einen Bediener besonders bequem sein, wenn durch den automatischen Übergang in den Passivmodus, die Notwendigkeit entfällt, diesen Modus manuell herbeiführen zu müssen.

Die Erfindung wird im Folgenden anhand zweier ein Ausführungsbeispiel darstellender Zeichnungen näher erläutert:
Dabei zeigen
   Figur 1 eine schematische Darstellung eines Ausführungsbeispiels eines erfindungsgemäßen Lichtbogenschweißgeräts in Form eines Blockschaltbilds;
   Figur 2 eine schematische Darstellung des Verlaufs des Schweißstroms in Abhängigkeit von der Fühlerspannung und dem gewählten Betriebsmodus gemäß des Ausführungsbeispiels.

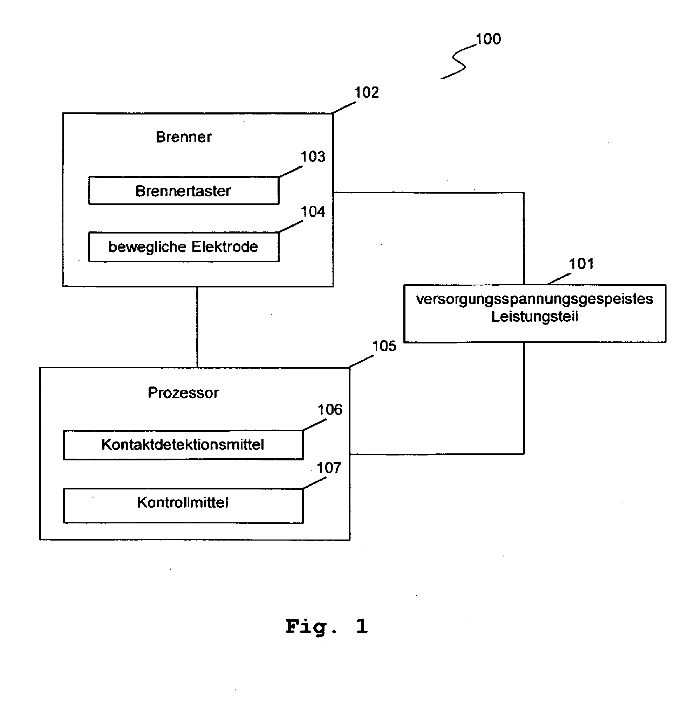

Figur 1 zeigt ein Ausführungsbeispiel eines erfindungsgemäßen Lichtbogenschweißgeräts 100 in einer schematischen Darstellung als Blockschaltbild. Es umfasst ein versorgungsspannungsgespeistes Leistungsteil 101, einen Brenner 102, ein Kontaktdetektionsmittel 106 und ein Kontrollmittel 107. Das Kontaktdetektionsmittel 106 und das Kontrollmittel 107 sind in Form eines Prozessors 105 ausgestaltet. Der Brenner 102 wiederum umfasst einen Brennertaster 103 und eine bewegliche Elektrode 104. Der Brenner 102 und der Prozessor 105 sind jeweils elektrisch mit dem versorgungsspannungsgespeisten Leistungsteil 101 verbunden. Zudem besteht eine elektrische Verbindung zwischen Brenner 102 und Prozessor 105.

Das Kontaktdetektionsmittel 106, d.h. der Prozessor 105, ist konfiguriert, die Trennung eines Kontaktes der beweglichen Elektrode 104 mit einer Oberfläche eines Werkstücks zu detektieren. Weiterhin ist das Kontrollmittel 107, also in diesem Fall wiederum der Prozessor 105, konfiguriert, nach der Detektion der Trennung des Kontaktes der beweglichen Elektrode 104 mit der Oberfläche des Werkstücks automatisch einen Lichtbogen zu zünden und nach einem vorgegebenen Muster aufrechtzuerhalten. Zu diesem Zweck kann eine Fühlerspannung zwischen der beweglichen Elektrode 104 und einem zu bearbeitenden Werkstück angelegt werden. Dies bewirkt das Kontrollmittel 107, indem es das versorgungsspannungsgespeiste Leistungsteil 101 entsprechend steuert.

Bei Kontakt der beweglichen Elektrode 104 mit dem Werkstück entsteht ein Kurzschluss. Die Fühlerspannung sinkt ab. Wird die bewegliche Elektrode 104 von der Werkstücksoberfläche abgehoben und der Kontakt somit getrennt, steigt die Fühlerspannung wieder an. Die Fühlerspannung ist mittels des Kontaktdetektiosmittels 106 messbar. Das Kontaktdetektionsmittel 106 detektiert also über diesen Spannungsanstieg die Kontakttrennung. Da in dem an dieser Stelle diskutierten Beispiel der Prozessor 105 gleichermaßen das Kontaktdetektionsmittel 106 und das Kontrollmittel 107 darstellt, kann er nach erfolgter Kontakttrennung die Zündung des Lichtbogens einleiten, ohne dass ein Signalisierungsvorgang zwischen Kontaktdetektionsmittel 106 und Kontrollmittel 107 stattfinden müsste. Zur Lichtbogenzündung werden jedoch entsprechende Kontrollsignale vom Kontrollmittel 107 an das versorgungsspannungsgespeiste Leistungsteil 101 gesendet. Mittels eines Hochspannungsimpulses kann dann der Lichtbogen zwischen Werkstück und beweglicher Elektrode 104 gezündet werden. Das Kontrollmittel 107 oder das Kontaktdetektionsmittel 106 ist konfiguriert, die automatische Zündung des Lichtbogens erst nach einer vorgegebenen Verzögerungszeit nach der Trennung des Kontakts von beweglicher Elektrode 104 und Werkstücksoberfläche zu initiieren.

In dem in Figur 1 gezeigten Ausführungsbeispiel der vorliegenden Erfindung ist der Prozessor 105 konfiguriert, die Zündung eines Lichtbogens nur in einem zuvor gewählten Aktivmodus einzuleiten. Um es in diesen Modus zu schalten, ist der Brennertaster 103 vorgesehen, dessen Betätigung den Übergang in den Aktivmodus auslöst. Ein erneutes Betätigen hat zur Folge, dass das Lichtbogenschweißgerät 100 in den Passivmodus zurückversetzt wird. Der Brennertaster 103 stellt somit auch ein Bedienmittel dar, dass für das Auslösen des Übergangs vom Aktivmodus zum Passivmodus vorgesehen ist.

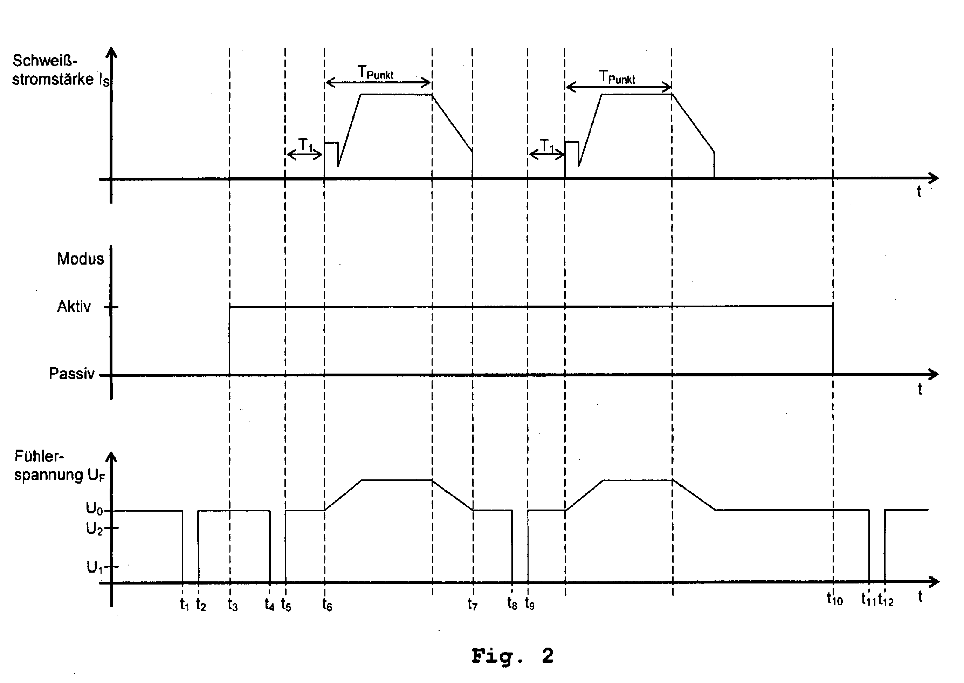

Figur 2 ist eine schematische Darstellung des Verlaufs des Schweißstroms I_{S} in Abhängigkeit von der Fühlerspannung U_{F} und dem gewählten Betriebsmodus für die in Figur 1 dargestellte Ausführungsform des erfindungsgemäßen Lichtbogenschweißgeräts 100. Die Darstellung besteht aus drei Diagrammen. Das untere Diagramm zeigt den Verlauf der Fühlerspannung U_{F} über der Zeit t. Die Fühlerspannung U_{F} ist abhängig von dem Umstand, ob die bewegliche Elektrode 104 mit der Oberfläche des zu bearbeitenden Werkstücks in Kontakt ist oder nicht. Das mittlere Diagramm zeigt den Modus an, indem sich das erfindungsgemäße Lichtbogenschweißgerät 100 befindet. Es existieren wie oben beschrieben ein Aktiv- und ein Passivmodus. Das obere Diagramm schließlich zeigt den Verlauf des Schweißstromes I_{S} in Abhängigkeit von den beiden anderen Größen an über der Zeit t an. Es sei darauf hingewiesen, dass die Darstellung rein schematischer Natur ist. Ihr Zweck besteht in der Erläuterung der vorliegenden Erfindung. Der Schwerpunkt liegt daher nicht auf einer maßstabsgetreuen Wiedergabe der tatsächlichen Spannungs- und Stromverläufe.

Vor dem Zeitpunkt t₁ besteht kein Kontakt zwischen beweglicher Elektrode 104 und der Oberfläche des Werkstücks. Es liegt also kein Kurzschluss der Fühlerspannung U_{F} vor. Sie hat dann den Wert U₀. Zum Zeitpunkt t₁ wird der Kontakt hergestellt. Der Kurzschluss bewirkt, dass die Fühlerspannung U_{F} unter den Wert U₀ fällt. Das Kontaktdetektionsmittel 106 ist in der Lage, diesen Spannungsabfall festzustellen. Dazu kann es den Kontakt als hergestellt betrachten, wenn die Fühlerspannung U_{F} unter einen ersten Schwellwert U₁ sinkt, der kleiner als U₀ ist. Zum Zeitpunkt t₂ wird der Kontakt der beweglichen Elektrode 104 mit der Oberfläche des Werkstücks getrennt. Also Folge dieser Trennung und der damit einhergehenden Aufhebung des Kurzschlusses steigt die Fühlerspannung U_{F} wieder auf den Wert U₀ an. Das Kontaktdetektionsmittel 106 erkennt auch diesen Anstieg. Dazu kann es den Kontakt als getrennt betrachten, wenn die Fühlerspannung U_{F} über einen zweiten Schwellwert U₂ steigt, der kleiner oder gleich als U₀ sein kann. Gleichzeit gilt logischerweise, dass U₂ > U₁. Im untersten Diagramm von Figur 2 ist ein Paar beispielhafter Schwellwerte U₁, U₂ eingezeichnet.

Die Trennung des Kontakts von beweglicher Elektrode 104 und Werkstückoberfläche wird zwar vom Kontaktdetektionsmittel detektiert 107. Das Lichtbogenschweißgerät 100 allerdings befindet sich in dem an dieser Stelle beschriebenen Ausführungsbeispiel der vorliegenden Erfindung zum Zeitpunkt t₂ nicht in einem Aktivmodus, wie im mittleren Diagramm von Figur 2 zu sehen ist. Die Trennung des Kontakts bleibt in diesem Fall somit ohne Wirkung.

Erst zur Zeit t₃ betätigt der Bediener des Lichtbogenschweißgeräts 100 das Bedienmittel in Form des Brennertasters 103, um so den Übergang des Lichtbogenschweißgeräts 100 in den Aktivzustand herbeizuführen. Die Zeitpunkte t₄ und t₅ fallen in eine Phase, in der sich das Lichtbogenschweißgerät 100 nach wie vor im Aktivzustand befindet. Das erneute Aufbauen eines Kontakts zwischen beweglicher Elektrode 104 und Werkstücksoberfläche zum Zeitpunkt t₄ sowie die Trennung dieses Kontaktes zum Zeitpunkt t₅ werden vom Kontaktdetektionsmittel 106 festgestellt.

Daraufhin steuert das Kontrollmittel 107 das versorgungsspannungsgespeiste Leistungsteil 101 dahingehend, die automatische Zündung des Lichtbogens nach einer vorgegebenen Verzögerungszeit T₁ nach der Trennung des Kontakts von beweglicher Elektrode 104 und Werkstücksoberfläche zum Zeitpunkt t₅ zu initiieren. Damit wird ein erster Schweißvorgang eingeleitet. Das Kontrollmittel 107 ist so konfiguriert, dass der Lichtbogen nach einem vorgegebenen Muster aufrechterhalten wird. Das aufrechterhalten des Lichtbogens nach einem vorgegeben Muster umfasst die Steuerung der Schweißstromstärke Iₛ und beinhaltet auch das Löschen des Lichtbogens. Ein solches Muster kann von einem Bediener eigenhändig programmiert worden sein, es kann durch den Bediener aus einer Reihe von zur Verfügung stehenden Muster ausgewählt worden sein oder es kann sich um ein Muster handeln, das als Standardeinstellung automatisch beim Einschalten des Lichtbogenschweißgeräts 100 gewählt wird. Im oberen Diagramm von Figur 4 ist ein solches Muster gezeigt. Zum Zeitpunkt t₆ beginnt die Zündung des Lichtbogens. Nach der Punktzeit T_{Punkt} sorgt das Kontrollmittel für einen Abfall der Schweißstromstärke I_{S}, bis sie schließlich zum Zeitpunkt t₇ auf Null abgefallen ist und der Lichtbogen erlischt.

Das Kontrollmittel 107 ist konfiguriert, nach dem Erlöschen des Lichtbogens eine erneute Zündung des Lichtbogens erst zu initiieren, wenn eine wiederholte Trennung des Kontaktes der beweglichen Elektrode 104 mit einer Oberfläche des Werkstücks durch das Kontaktdetektionsmittel detektiert wurde. Der Aktivmodus wird in diesem Beispiel auch nach dem Zeitpunkt t₇ aufrechterhalten. Die erneute Herstellung eines Kontakts von beweglicher Elektrode 104 und Werkstückoberfläche zum Zeitpunkt t₈ sowie die Trennung dieses Kontakts zum Zeitpunkt t₉ führen daher dazu, dass nach der Verzögerungsdauer T₁ ein zweiter Schweißvorgang ausgeführt wird.

In Figur 2 wird also das Verhalten eines Lichtbogenschweißgeräts 100 mit einem Kontrollmittel 107 beschrieben, das konfiguriert ist, mindestens zweimal hintereinander einen Lichtbögen zu zünden, nach einem vorgegebenen Muster aufrechtzuerhalten und erlöschen zu lassen. Das Muster, nach dem der Schweißstrom I_{S} verläuft, ist identisch zu dem Muster des Schweißstromes I_{S} beim ersten Schweißvorgang. Erfindungsgemäß ist dies jedoch keine Notwendigkeit. Der Verlauf des Schweißstromes I_{S} beim zweiten Schweißvorgang könnte auch so gesteuert werden, dass er sich von dem beim ersten Schweißvorgang unterscheidet.

Zum Zeitpunkt t₁₀ wird durch erneutes Betätigen des Brennertasters 103 vom Aktivmodus in den Passivmodus zurückgekehrt. Anschließende führt die erneute Herstellung eines Kontakts von beweglicher Elektrode 104 und Werkstückoberfläche zum Zeitpunkt t₁₁ sowie die Trennung dieses Kontakts zum Zeitpunkt t₁₂ nicht zur Lichtbogenzündung.

Das erfindungsgemäße Lichtbogenschweißgerät und das erfindungsgemäße Lichtbogenschweißverfahren besitzen eine Reihe von Vorteilen. So kann die automatische Zündung des Lichtbogens aufgrund der Detektion einer Trennung des Kontakts von beweglicher Elektrode und zu bearbeitendem Werkstück eine deutlich verbesserte Handhabung eines Lichtbogenschweißgeräts bewirken. Dadurch, dass die Lichtbogenzündung automatisch stattfindet, entfällt die Notwendigkeit durch die Betätigung eines Bedienelements, das üblicherweise am Brenner angebracht ist, den Lichtbogen zu zünden. Damit geht kann eine Produktivitätssteigerung insbesondere dann einhergehen, wenn, beispielsweise beim WIG-Punktschweißen, hintereinander mehrere Schweißpunkte zu setzen sind. Ein weiterer Vorteil ist darin zu sehen, dass der Wegfall der Betätigung eines Bedienelements am Brenner die Möglich einer besonders sicheren Brennerführung eröffnen kann. So besteht bei herkömmlichen Lichtbogenschweißgeräten die Gefahr, dass das Betätigen des Bedienelements zu einer unerwünschten Bewegung des Brenners führt. Damit kann sich die Position von beweglicher Elektrode und Werkstück zueinander ändern und gegebenenfalls ein Schweißvorgang an einer falschen Stelle ausgelöst werden. Die erfindungsgemäße automatische Lichtbogenzündung kann dieses Problem lösen.

## Patentansprüche

1. Lichtbogenschweißgerät (100) zum Schweißen eines Werkstücks mit einer beweglichen Elektrode (104), einem versorgungsspannungsgespeisten Leistungsteil (101), einem Kontrollmittel (107)und einem Kontaktdetektionsmittel (106), das konfiguriert ist, die Trennung eines Kontaktes der beweglichen Elektrode (104) mit einer Oberfläche des Werkstücks zu detektieren, **dadurch gekennzeichnet, dass** das Kontrollmittel (107) konfiguriert ist, nach der Detektion der Trennung des Kontaktes der beweglichen Elektrode (104) mit der Oberfläche des Werkstücks automatisch einen Lichtbogen zu zünden und nach einem vorgegebenen Muster aufrechtzuerhalten, wobei das Kontrollmittel (107) oder das Kontaktdetektionsmittel (106) konfiguriert ist, die automatische Zündung des Lichtbogens nach einer vorgegebenen Verzögerungszeit (T₁) nach der Trennung des Kontakts von beweglicher Elektrode (104) und Werkstücksoberfläche zu initiieren.

2. Lichtbogenschweißgerät (100) nach Anspruch 1, **dadurch gekennzeichnet, dass** es sich um ein Wolfram-Inertgas-Schweißgerät handelt.

3. Lichtbogenschweißgerät (100) nach Anspruch 2, **dadurch gekennzeichnet, dass** es zum Punktschweißen verwendbar ist.

4. Lichtbogenschweißgerät (100) nach einem der Ansprüche 1 bis 3, **dadurch gekennzeichnet, dass** eine Fühlerspannung (U_{F}) zwischen beweglicher Elektrode (104) und Werkstück angelegt werden kann, die mittels des Kontaktdetektionsmittels (106) messbar ist.

5. Lichtbogenschweißgerät (100) nach einem der Ansprüche 1 bis 4, **dadurch gekennzeichnet, dass** das Kontrollmittel (107) konfiguriert ist, mindestens zweimal hintereinander einen Lichtbögen zu zünden, nach einem vorgegebenen Muster aufrechtzuerhalten und erlöschen zu lassen.

6. Lichtbogenschweißgerät (100) nach einem der Ansprüche 1 bis 4, **dadurch gekennzeichnet, dass** das Kontrollmittel (107) konfiguriert ist, nach dem Erlöschen des Lichtbogens eine erneute Zündung des Lichtbogens erst zu initiieren, wenn eine wiederholte Trennung des Kontaktes der beweglichen Elektrode (104) mit einer Oberfläche des Werkstücks durch das Kontaktdetektionsmittel (106) detektiert wurde.

7. Lichtbogenschweißgerät (100) nach einem der Ansprüche 1 bis 6, **dadurch gekennzeichnet, dass** das Kontrollmittel (107) oder das Kontaktdetektionsmittel (106) konfiguriert ist, die Zündung eines Lichtbogens nur in einem zuvor gewählten Aktivmodus einzuleiten.

8. Lichtbogenschweißgerät nach Anspruch 7, **dadurch gekennzeichnet, dass** ein Brennertaster (103) vorgesehen ist, dessen Betätigung den Übergang in den Aktivmodus auslöst.

9. Lichtbogenschweißgerät (100) nach einem der Ansprüche 7 oder 8, **dadurch gekennzeichnet, dass** ein Übergang vom Aktivmodus zu einem Passivmodus automatisch nach dem Verstreichen eines vorgegebenen Zeitraumes nach dem Ende eines Schweißvorgangs erfolgt.

10. Lichtbogenschweißgerät (100) nach einem der Ansprüche 7 bis 9, **dadurch gekennzeichnet, dass** für das Auslösen des Übergangs vom Aktivmodus zu einem Passivmodus ein entsprechendes Bedienmittel (103) vorgesehen ist.

11. Verfahren zum Schweißen eines Werkstücks unter Verwendung eines Lichtbogenschweißgeräts (100), das eine bewegliche Elektrode (104), ein versorgungsspannungsgespeistes Leistungsteil (101) und ein Kontrollmittel (107) umfasst, wobei die Trennung des Kontaktes der beweglichen Elektrode (104) mit einer Oberfläche des Werkstücks durch ein Kontaktdetektionsmittel (106) detektiert wird, **dadurch gekennzeichnet, dass** nach der Detektion der Trennung des Kontakts durch das Kontrollmittel(107) automatisch ein Lichtbogen gezündet und nach einem vorgegebenen Muster aufrechterhalten wird, wobei die automatische Zündung des Lichtbogens nach einer vorgegebenen Verzögerungszeit (T₁) nach der Trennung des Kontakts von beweglicher Elektrode (104) und Werkstücksoberfläche durch das Kontrollmittel (107) oder das Kontaktdetektionsmittel (106) initiiert wird.

## Claims

1. Arc-welding device (100) for welding a workpiece with a moveable electrode (104), a power part (101) fed with supply voltage, a checking means (107) and a contact detection means (106) which is configured to detect the separation of a contact of the moveable electrode (104) with a surface of the workpiece, **characterised in that** the checking means (107) is configured to ignite an arc automatically following the detection of the separation of the contact of the moveable electrode (104) with the surface of the workpiece and to maintain the same in accordance with a predetermined pattern, wherein the checking means (107) or the contact detection means (106) is configured to initiate the automatic ignition of the arc following a predetermined delay time (T₁) following the separation of the contact of moveable electrode (104) and workpiece surface.

2. Arc-welding device (100) according to Claim 1, **characterised in that** it is a tungsten inert gas welding device.

3. Arc-welding device (100) according to Claim 2, **characterised in that** it can be used for spot welding.

4. Arc-welding device (100) according to one of Claims 1 to 3, **characterised in that** a sensor voltage (U_{F}) can be applied between moveable electrode (104) and workpiece, which can be measured by means of the contact detection means (106).

5. Arc-welding device (100) according to one of Claims 1 to 4, **characterised in that** the checking means (107) is configured to ignite an arc at least twice successively, to maintain the same in accordance with a predetermined pattern and to allow the same to be extinguished.

6. Arc-welding device (100) according to one of Claims 1 to 4, **characterised in that** the checking means (107) is configured to only initiate a renewed ignition of the arc following the extinguishing of the arc, if a repeated separation of the contact of the moveable electrode (104) with a surface of the workpiece has been detected by the contact detection means (106).

7. Arc-welding device (100) according to one of Claims 1 to 6, **characterised in that** the checking means (107) or the contact detection means (106) is configured to introduce the ignition of an arc only in a previously chosen active mode.

8. Arc-welding device according to Claim 7, **characterised in that** a torch button (103) is provided, the actuation of which triggers the transition to active mode.

9. Arc-welding device (100) according to one of Claims 7 or 8, **characterised in that** a transition from active mode to a passive mode takes place automatically following the lapse of a predetermined period of time following the end of a welding procedure.

10. Arc-welding device (100) according to one of Claims 7 to 9, **characterised in that** a corresponding control means (103) is provided for the triggering of the transition from active mode to a passive mode.

11. Method for welding a workpiece using an arc-welding device (100), which comprises a moveable electrode (104), a power part (101) fed with supply voltage and a checking means (107), wherein the separation of the contact of the moveable electrode (104) with a surface of the workpiece is detected by a contact detection means (106), **characterised in that** an arc is ignited automatically and is maintained in accordance with a predetermined pattern following the detection of the separation of the contact by the checking means (107), wherein the automatic ignition of the arc is initiated by the checking means (107) or the contact detection means (106) following a predetermined delay time (T₁) following the separation of the contact of moveable electrode (104) and workpiece surface.

## Revendications

1. Appareil de soudage à l'arc (100) pour le soudage d'une pièce doté d'une électrode (104) mobile, d'une partie de puissance (101) alimentée par tension d'alimentation, d'un moyen de contrôle (107) et d'un moyen de détection de contact (106), qui est configuré pour détecter la séparation d'un contact de l'électrode (104) mobile avec une surface de la pièce, **caractérisé en ce que** le moyen de contrôle (107) est configuré pour allumer automatiquement un arc après la détection de la séparation du contact de l'électrode (104) mobile avec la surface de la pièce et la maintenir selon un modèle prédéfini, le moyen de contrôle (107) ou le moyen de détection de contact (106) étant configuré pour initier l'allumage automatique de l'arc après un temps de temporisation (T₁) prédéfini après la séparation du contact de l'électrode mobile (104) et de la surface de la pièce.

2. Appareil de soudage à l'arc (100) selon la revendication 1, **caractérisé en ce qu'**il s'agit d'un appareil de soudage à tungstène et gaz inerte.

3. Appareil de soudage à l'arc (100) selon la revendication 2, **caractérisé en ce qu'**il peut être utilisé pour le soudage point par point.

4. Appareil de soudage à l'arc (100) selon l'une des revendications 1 à 3, **caractérisé en ce qu'**une tension de palpeur (U_{F}) peut être appliquée entre l'électrode (104) mobile et la pièce, laquelle peut être mesurée à l'aide du moyen de détection de contact (106).

5. Appareil de soudage à l'arc (100) selon l'une des revendications 1 à 4, **caractérisé en ce que** le moyen de contrôle (107) est configuré pour allumer un arc, au moins deux fois l'une derrière l'autre, pour le maintenir selon un modèle prédéfini et pour le faire éteindre.

6. Appareil de soudage à l'arc (100) selon l'une des revendications 1 à 4, **caractérisé en ce que** le moyen de contrôle (107) est configuré pour initier un nouvel allumage de l'arc après l'extinction de l'arc uniquement lorsqu'une séparation séparée du contact de l'électrode (104) mobile avec une surface de la pièce a été détectée par le moyen de détection de contact (106).

7. Appareil de soudage à l'arc (100) selon l'une des revendications 1 à 6, **caractérisé en ce que** le moyen de contrôle (107) ou le moyen de détection de contact (106) est configuré pour initier l'allumage d'un arc uniquement dans un mode actif choisi auparavant.

8. Appareil de soudage à l'arc selon la revendication 7, **caractérisé en ce qu'**il est prévu un bouton-poussoir de brûleur (103), dont l'actionnement déclenche le transfert dans le mode actif.

9. Appareil de soudage à l'arc (100) selon l'une des revendications 7 ou 8, **caractérisé en ce qu'**un transfert du mode actif à un mode passif s'effectue automatiquement après l'écoulement d'une période prédéfinie suivant la fin d'un processus de soudage.

10. Appareil de soudage à l'arc (100) selon l'une des revendications 7 à 9, **caractérisé en ce qu'**un moyen de commande (103) approprié est prévu pour le déclenchement du passage du mode actif à un mode passif.

11. Procédé pour le soudage d'une pièce avec l'utilisation d'un appareil de soudage à l'arc (100), qui comprend une électrode (104) mobile, une partie de puissance (101) alimenté en tension d'alimentation et un moyen de contrôle (107), la séparation du contact de l'électrode (104) mobile avec une surface de la pièce étant détectée par un moyen de détection de contact (106), **caractérisé en ce que**, après la détection de la séparation du contact par le moyen de contrôle (107), un arc est allumé automatiquement et est maintenu selon un modèle prédéfini, l'allumage automatique de l'arc étant initié après un temps de temporisation (T₁) prédéfini après la séparation du contact de l'électrode (104) mobile et de la surface de la pièce étant initié par le moyen de contrôle (107) ou le moyen de détection de contact (106).
